# EUROPÄISCHE PATENTSCHRIFT

(11) **EP 1 410 225 B1**
(45) Veröffentlichungstag und Bekanntmachung des Hinweises auf die Patenterteilung: **01.06.2005**
(21) Anmeldenummer: 02700271.6
(22) Anmeldetag: 25.02.2002
(51) Int. Cl.: G06F 13/40

(54) **DATENVERARBEITUNGSSTRUKTUR**
DATA PROCESSING STRUCTURE
STRUCTURE DE TRAITEMENT DE DONNEES

(30) Priorität: 31.05.2001 DE 10126749
(43) Veröffentlichungstag der Anmeldung: 21.04.2004
(73) Patentinhaber: Wittenstein AG, 97999 Igersheim (DE)
(72) Erfinder: KRUG, Andreas, 97980 Bad Mergentheim (DE); KALKER, Thomas, 97999 Igersheim (DE)
(74) Vertreter: Weiss, Peter, Dr.
(86) Internationale Anmeldenummer: PCT/EP2002/001937
(87) Internationale Veröffentlichungsnummer: WO 2002/097641

(56) Entgegenhaltungen:
- EP-A- 0 361 142
- WO-A-00/77585
- WO-A-01/23971
- DE-A- 19 750 365
- US-A- 6 055 633

## Beschreibung

Die vorliegende Erfindung betrifft eine Datenverarbeitungsstruktur mit einer Vielzahl von Prozessoren und einem Datenbus für eine Datenkommunikation mit einer seriellen Datenstruktur.

Antriebssysteme bestehen zumeist aus einer Antriebssteuerung mit einer Regelelektronik, einem Getriebe und einem Motor. Insbesondere bei komplexen Systemen können dabei eine Vielzahl derartiger Antriebssysteme auf kleinem Raum auftreten, wie z.B. in einem Roboterarm mit einer Vielzahl von Freiheitsgraden in der Bewegungsrichtung.

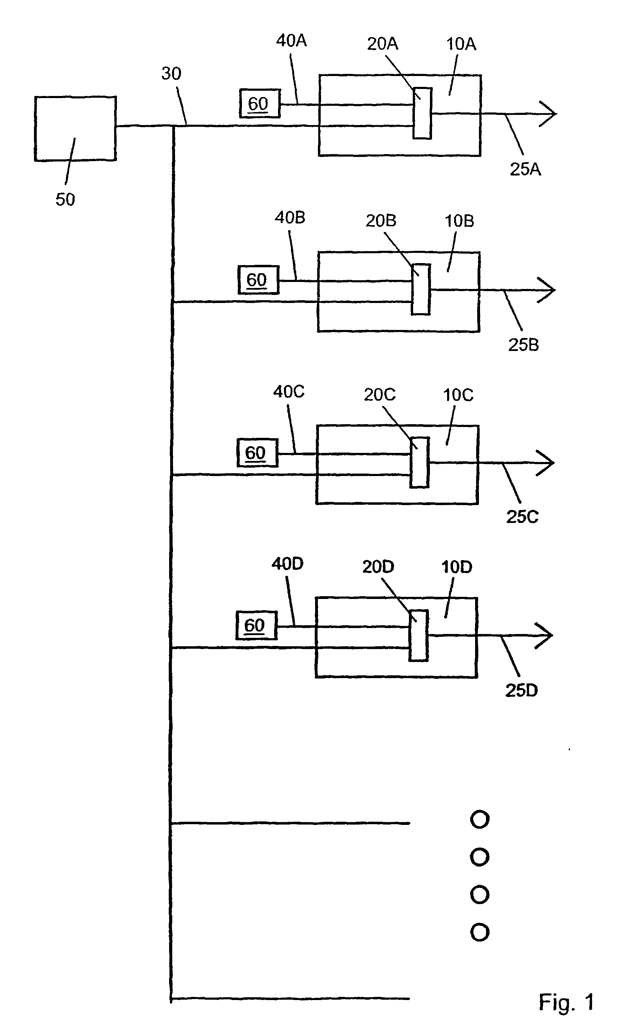

Figur 1 zeigt ein im Stand der Technik bekanntes Antriebssystem für Roboter mit einer Vielzahl von Antriebssteuerungen 10A, 10B, ..., etc. Jede der Antriebssteuerungen 10i (mit i = A, B, ..., etc.) weist einen Microcontroller (oder Microprozessor) 20i auf, der wiederum z. B. einen Motor oder Motor und Getriebe steuert (in Figur 1 angedeutet durch den Pfeil 25i). Jeder der Microcontroller 20i ist jeweils parallel mit einem Feldbus 30 verbunden, über den jeder einzelne der Microcontroller 20i zentral von einer zentralen Steuerung 50 gesteuert werden kann. Für den Feldbus 30 wird hier beispielsweise ein CAN (Control Area Network) Bussystem verwendet, wie dies insbesondere aus dem Automobilbereich bekannt ist.

Insofern die Microcontroller 20i nicht bereits konfiguriert sind oder falls diese einzeln oder kollektiv umkonfiguriert werden sollen, muss jeweils von außen Zutritt zu dem oder den entsprechenden Microcontrollern 20i erfolgen, da eine Konfiguration über den Feldbus 30 nicht möglich ist. Der Microcontroller 20i braucht eine Minimal-Betriebssoftware, um den Feldbus zu 30 betreiben.

Um ein Vonaußenherantreten an die Microcontroller 20i zu vermeiden und den Programmierungsaufwand damit zu reduzieren, kann jeder zu programmierende Microcontroller 20i mit einem separaten Datenbus 40i angefahren werden, typischerweise einem seriellen Datenbus mit Punkt zu Punkt Struktur, wie einer RS232-Schnittstelle. Hierdurch wird für jeden zu programmierenden Microcontroller 20i jeweils eine Zuleitung eines Datenbusses 40i von einer zentralen Programmierungseinheit 60 erforderlich, wie in Fig. 1 dargestellt.

Obgleich durch das Hinzufügen der Datenbusse 40i zur Programmierung der Microcontroller 20i der Aufwand für die Programmierung deutlich herabgesetzt werden kann und die Microcontroller 20i einzeln und flexibel programmiert werden können, erweist sich gerade der erhöhte Verdrahtungsaufwand durch die Einzelzuführungen der Datenbusse 40i als für viele Fälle unpraktikabel, insbesondere wenn nur wenig Raum zur Verfügung steht, wie bei einem Roboterarm. Da sich die Anzahl der erforderlichen Datenbusse 40i jeweils aufaddiert, werden sehr schnell die vorhandenen Platzreserven aufgebraucht, und es muss entsprechend dem Platzangebot eine Auswahl an Microcontrollern 20i getroffen werden, die mit jeweils einem Datenbus 40i ausgestattet und deshalb frei programmierbar sind.

Die WO02/097641 A2 offenbart ein Feldbussystem, bei welchem die Betriebssoftware an beliebige Teilnehmer über den BUS in zwei interne Speicher beschickt wird. Nach dem Laden bzw. Aktualisieren der internen Speicher eines Teilnehmers wird dann der Teilnehmer aktiviert. Während dieses Vorganges sind die anderen übrigen Teilnehmer geöffnet.

Der vorliegenden Erfindung liegt die Aufgabe zugrunde, ein Antriebssystem mit einer Vielzahl von Antriebssteuerungen, insbesondere für Roboteranwendungen, zu schaffen, bei dem die Antriebssteuerungen jeweils frei programmierbar sind und das auch gerade bei Anwendungen mit hohen Anforderungen an die Kompaktheit des Systems einsetzbar ist.

Zur Lösung dieser Aufgabe führt, dass die Vielzahl von Prozessoren jeweils in paralleler Anschlussweise an den Datenbus ankoppelbar sind, und eine Datenkommunikation über den Datenbus mit einem der Vielzahl von Prozessoren, vorzugsweise eine Programmierung dieses Prozessors, für diesen Prozessor zugelassen und für alle anderen der Vielzahl von Prozessoren unterbunden wird.

Entsprechend der vorliegenden Erfindung wird jeder einer Vielzahl von Microcontrollern sowohl von einem Feldbus zur Steuerung der Microcontroller als auch von einem seriellen Datenbus zur Programmierung der Microcontroller jeweils in paralleler Anschlussweise angekoppelt. Dabei ist jedem Microcontroller eine Steuerungseinheit und eine Schalteinheit zugeordnet. Zur Programmierung eines der Microcontroller wird dessen zugeordnete Steuerungseinheit über den Feldbus angesteuert, so dass dieser auf die entsprechende Schalteinheit wirkt und eine Datenkommunikation über den Datenbus hin zu dem entsprechenden Microcontroller zugelassen wird. Alle anderen über den Datenbus verbundenen Microcontroller werden gleichzeitig durch deren entsprechende Steuerungseinheiten und Schalteinheiten von dem Datenbus abgetrennt, so dass ausschließlich eine Datenkommunikation mit dem einen zu programmierenden Microcontroller zugelassen wird. Die Programmierung des entsprechenden Microcontrollers erfolgt dann über den seriellen Datenbus.

Obgleich demnach erfindungsgemäß die Zuführung des seriellen Datenbusses zu den Microcontrollern in Form einer parallelen Anschlußweise erfolgt, wird erfindungsgemäß durch das entsprechende Zuschalten des zu programmierenden Microcontrollers an den Datenbus und das gleichzeitige Trennen der anderen (nicht zu programmierenden) Microcontrollers von dem Datenbus sichergestellt, dass die serielle Datenübertragung zur Programmierung des einen Microcontroller sicher und ungestört durchgeführt werden kann. Zur Programmierung eines weiteren Microcontrollers, wird entsprechend dieser zu dem Datenbus zugeschaltet und alle anderen Microcontroller von dem Datenbus getrennt.

Auf diese Weise kann ein Microcontroller nach dem anderen einfach und flexibel programmiert werden, ohne dass es eines Eingriffes von außen bedarf. Gleichzeitig wird durch die parallele Anschlussweise des Datenbusses die erforderliche Zuleitungsmenge auf ein Minimum reduziert, so dass gerade auch Anwendungen mit starken Einschränkungen im Raumangebot für derartige Kabelzuführungen ermöglicht werden, wie z.B. Roboteranwendungen.

Die Erfindung ermöglicht damit durch das Zusammenwirken des Feldbus mit den Microcontrollern jeweils zugeordneten Steuerungseinheiten und Schalteinheiten, dass der serielle Datenbus trotz paralleler Anschlussweise für eine Datenkommunikation mit einem der Microcontroller physisch genau diesem in serieller Anschlussweise zugeordnet ist und alle anderen Microcontroller von dem seriellen Datenbus physisch abgekoppelt sind. In anderen Worten emuliert die Erfindung damit eine serielle Busankopplung für eine serielle Datenstruktur bei einer parallelen Anschlussweise des Busses.

Es ist damit ersichtlich, dass die Erfindung nicht auf Antriebssysteme oder Roboteranwendungen begrenzt ist, sondern allgemein überall dort Einsatz finden kann, wo eine Vielzahl von Prozessoren (wie Microcontroller oder Mikroprozessoren) über einen Feldbus gesteuert werden und eine Datenkommunikation (z. B. zur Programmierung) mit den Prozessoren über einen weiteren Datenbus mit einer seriellen Datenstruktur erfolgen soll. Weitere Einsatzgebiete der Erfindung sind somit insbesondere Druckmaschinen, Verpackungsmaschinen, Medizintechnik, Halbleiterherstellung etc..

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 ein im Stand der Technik bekanntes Antriebssystem für Roboteranwendungen; und
Figur 2 ein erfindungsgemäßes System zur Programmierung eines Antriebssystems insbesondere für Roboter.

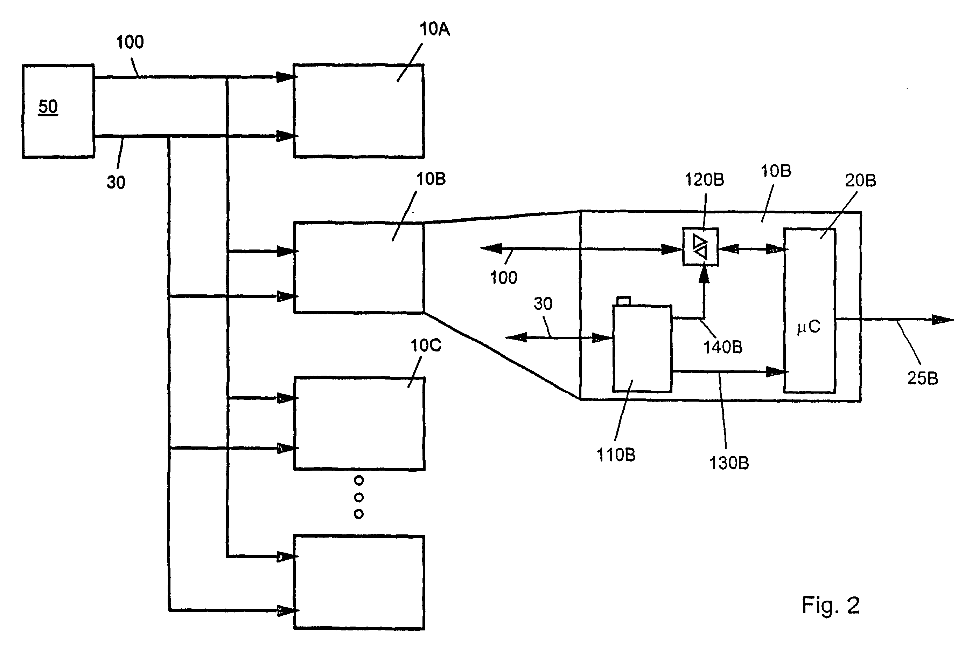

Figur 2 stellt exemplarisch eine bevorzuge Ausführungsform gemäß der Erfindung für das Beispiel einer Antriebssteuerung insbesondere für Roboteranwendungen dar. Wie auch in Figur 1 dargestellt, weist das Antriebssystem gemäß Figur 2 eine Vielzahl von Antriebssteuerungen 10i (mit i = A, B,..., etc.) auf. Jede der Antriebssteuerungen 10i ist in paralleler Anschlussweise an den Feldbus 30 angeschlossen und kann über diesen zentral von der zentralen Steuerung 50 gesteuert werden.

Ferner ist jede der Antriebssteuerungen 10i ebenso in paralleler Anschlussweise mit einem Datenbus 100 mit serieller Datenstruktur verbunden, über den eine Datenkommunikation zu einer der Antriebssteuerungen 10i durchgeführt werden kann. In dem Ausführungsbeispiel nach Fig. 2 ist der Datenbus 100 - ebenso wie der Feldbus 30 - mit der zentralen Steuerung 50 verbunden, die neben der zentralen Steuerung auch zum Datenaustausch und zur Programmierung der Antriebssteuerungen 10 dient. Es bedarf jedoch keiner Erwähnung, dass anstelle der zentralen Steuerung 50, der Datenbus 100 auch ebenso mit einer separaten Datenaustausch- und/oder Programmierungseinheit verbunden sein kann.

Da wie aus Figur 2 zu erkennen ist, der Feldbus 30 und der Datenbus 100 völlig parallel zueinander aufgebaut sein können, können diese physisch zusammengefasst und beispielsweise als ein gemeinsamer Kabelstrang verlegt werden.

Wie aus der vergrößerten Darstellungsweise auf der rechten Seite in Figur 2 für die Antriebssteuerung 10B zu erkennen ist, weist jede der Antriebssteuerungen 10i einen Microcontroller 20i auf, der beispielsweise zur Steuerung eines Motors oder Motor und Getriebe Verwendung finden kann (wie durch Pfeil 25i angedeutet ist). Es ist jedoch ersichtlich, dass der erfindungsgemäße Aufbau nicht auf Antriebssteuerungen im Allgemeinen oder solche wie sie in der Robotertechnologie Anwendung finden, beschränkt ist, sondern auf jegliche Systeme anwendbar ist, bei denen eine Vielzahl von Microcontrollern oder anderer entsprechender programmierbarer Bauteile über einen Feldbus gesteuert und durch einen Datenbus mit serieller Datenstruktur einzeln programmiert werden können.

Neben dem Microcontroller 20i weist jede der Antriebssteuerungen 10i ein Steuerungseinheit 110i und eine Schalteinheit 120i auf. Die Steuerungseinheit 110i ist an den Feldbus 30 gekoppelt und weist einen Steuerungsausgang 130i zu dem Microcontroller 20i und einen Anforderungsausgang 140i zu der Schalteinheit 120i hin auf. Die Schalteinheit 120i ist" auf der einen Seite mit dem Datenbus 100 und auf der anderen Seite mit dem Microcontroller 20i gekoppelt. Gesteuert wird die Schalteinheit 120i über den Anforderungsausgang 140i, wobei der Microcontroller 20i durch die Schalteinheit 120i entweder zu dem Datenbus 100 hin verbunden oder von diesem abgetrennt wird.

Im normalen Betriebsfall werden die Antriebssteuerungen 10i zentral über den Feldbus 30 gesteuert, wobei die entsprechenden Steuerungssignale von dem Feldbus 30 über die jeweilige Steuerungseinheit 110i an den dazugehörigen Microcontroller 20i über den Steuerungsausgang 130i weitergeleitet werden.

Zur Programmierung des Microcontrollers 20i erhält die dazugehörige Steuerungseinheit 110i über den Feldbus 30 ein entsprechendes Anforderungssignal und stellt dieses oder ein davon abgeleitetes Signal an den Anforderungsausgang 140i. Durch dieses Anforderungssignal schaltet die Schalteinheit 120i den Microcontroller 20i an den Datenbus 100, so dass eine Datenkommunikation zwischen der zentralen Steuerung 50 und dem Microcontroller 20i über den Datenbus 100 erfolgen kann.

Gleichzeitig mit dem Absenden des Anforderungssignals für die Steuerungseinheit 110i erhalten die anderen Steuerungseinheiten 110j (mit j = A, B,..., etc., aber j ≠ i) entsprechende Abtrennsignale, um dementsprechend über die dazugehörigen Schalteinheiten 120j die jeweiligen Microcontroller 20j von dem Datenbus 100 zu trennen.

Es ist klar, dass anstelle der Abtrennsignale auch aus dem Nichtvorhandensein eines Anforderungssignals für eine entsprechende Antriebssteuerung 10j geschlossen werden kann, dass der dazugehörige Microcontroller 20j von dem Datenbus 100 zu trennen ist. So können beispielsweise grundsätzlich alle Microcontroller 20 durch die Schalteinheiten 120 von dem Datenbus 100 getrennt werden, und nur bei einem positiven (oder negativen) Anforderungssignal für einen der Antriebssteuerungen 10i wird der dazugehörige Microcontroller 20i über die Schalteinheit 120i an den Datenbus 100 gekoppelt.

Der Feldbus 30 ist vorzugsweise ein CAN-Bus, und der Datenbus 100 ist vorzugsweise eine serieller RS232-Datenbus.

Über den Feldbus 30 in Verbindung mit der jeweiligen Steuerungseinheit 110i kann der Microcontroller 20i vorzugsweise in einen Bootstrap-Modus für die Programmierung versetzt werden.

## Patentansprüche

1. Eine Datenverarbeitungsstruktur mit einer Vielzahl von Prozessoren (20i), die über einen Feldbus (30) in paralleler Anschlussweise gesteuert werden können und einem Datenbus (100) für eine Datenkommunikation mit einer seriellen Datenstruktur,
**dadurch gekennzeichnet,**
**dass** die Vielzahl von Prozessoren (20i) jeweils in paralleler Anschlussweise sowohl an den Feldbus (30) als auch an den Datenbus (100) ankoppelbar sind, und
für eine Datenkommunikation über den Datenbus (100) mit einem der Vielzahl von Prozessoren (20i) dieser Prozessor (20i) an den Datenbus (100) angekoppelt wird, während alle anderen (20j) der Vielzahl von Prozessoren von dem Datenbus (100) getrennt werden.

2. Eine Datenverarbeitungsstruktur nach Anspruch 1, **dadurch gekennzeichnet, dass** die Vielzahl von Prozessoren (20i) jeweils in paralleler Anschlussweise an den Datenbus (100) ankoppelbar sind, und
eine Datenkommunikation über den Datenbus (100) mit einem der Vielzahl von Prozessoren (20i), vorzugsweise eine Programmierung dieses Prozessors (20i), für diesen Prozessor (20i) zugelassen und für alle anderen (20j) der Vielzahl von Prozessoren unterbunden wird.

3. Die Datenverarbeitungsstruktur nach Anspruch 1 oder 2, **dadurch gekennzeichnet, dass** für die Datenkommunikation über den Datenbus (100) mit einem der Vielzahl von Prozessoren (20i) dieser Prozessor (20i) an den Datenbus (100) ankoppelt wird, während alle anderen (20j) der Vielzahl von Prozessoren von dem Datenbus (100) getrennt werden.

4. Die Datenverarbeitungsstruktur nach einem der Ansprüche 1 bis 3, **dadurch gekennzeichnet, dass** zwischen jedem Prozessor (20i) und dem Datenbus (100) jeweils eine Schalteinheit (120i) gekoppelt ist, wobei die Schalteinheit (120i) den Prozessor (20i) entweder an den Datenbus (100) ankoppelt oder von dem Datenbus (100) trennt.

5. Die Datenverarbeitungsstruktur nach Anspruch 4, **dadurch gekennzeichnet, dass** die Vielzahl von Prozessoren (20i) über einen Feldbus (30) in paralleler Anschlussweise gesteuert werden können.

6. Die Datenverarbeitungsstruktur nach Anspruch 5, **dadurch gekennzeichnet, dass**
jedem Prozessor (20i) jeweils eine Steuerungseinheit (110i) zugeordnet ist,
die Steuerungseinheiten (110i) an den Feldbus (30) gekoppelt sind, und
die Steuerungseinheiten (110i) über den Feldbus (30) Steuerungssignale empfangen können, um über die dazugehörigen Schalteinheiten (120i) die jeweiligen Prozessoren (20i) entweder an den Datenbus (100) anzukoppeln oder von dem Datenbus (100) abzutrennen.

7. Eine Antriebssteuerung, vorzugsweise für einen Roboter, mit einer Datenverarbeitungsstruktur nach einer der vorangegangenen Ansprüche.

## Claims

1. A data processing structure having a plurality of processors (20i), which can be controlled via a field bus (30) in a parallel connection, and a data bus (100) for data communication with a serial data structure,
**characterised in that**
the plurality of processors (20i) can be connected both to the field bus (30) and to the data bus (100), in each case in a parallel connection, and,
for data communication with one of the plurality of processors (20i) via the data bus (100), this processor (20i) is connected to the data bus (100), while all the others (20j) of the plurality of processors are disconnected from the data bus (100).

2. A data processing structure according to claim 1, **characterised in that** the plurality a processors (20i) can each be connected to the data bus (100) in a parallel connection, and
data communication via the data bus (100) with one of the plurality of processors (20i), preferably a programming of this processor (20i), is permitted for this processor (20i) and prohibited for all the others (20j) of the plurality of processors.

3. The data processing structure according to claim 1 or 2, **characterised in that**, for the data communication via the data bus (100) with one of the plurality of processors (20i), this processor (20i) is connected to the data bus (100), while all the others (20j) of the plurality of processors are disconnected from the data bus (100).

4. The data processing structure according to one of claims 1 to 3, **characterised in that**, in each case, one switching unit (120i) is connected between each processor (20i) and the data bus (100), the switching unit (120i) either connecting the processor (20i) to the data bus (100) or disconnecting it from the data bus (100).

5. The data processing structure according to claim 4, **characterised in that** the plurality of processors (20i) can be controlled via a field bus (30) in a parallel connection.

6. The data processing structure according to claim 5, **characterised in that**
each processor (20i) is assigned in each case one control unit (110i),
the control units (110i) are connected to the field bus (30), and
the control units (110i) can receive control signals via the field bus (30) in order either to connect the respective processors (20i) to the data bus (100) via the associated switching units (120i), or to disconnect them from the data bus (100).

7. A drive controller, preferably for a robot, having a data processing structure according to one of the preceding claims.

## Revendications

1. Structure de traitement de données avec une pluralité de processeurs (20i) pouvant être commandés en mode de connexion parallèle par l'intermédiaire d'un bus de terrain (30), et un bus de données (100) pour une communication de données avec une structure de données sérielle,
**caractérisée par le fait**
**que** la pluralité de processeurs (20i) peuvent, chacun, être couplés en mode de connexion parallèle tant au bus de terrain (30) qu'au bus de données (100), et
**que** pour une communication de données par l'intermédiaire du bus de données (100) avec l'un de la pluralité de processeurs (20i), ce processeur (20i) est couplé au bus de données (100), tandis que tous les autres (20j) de la pluralité de processeurs sont séparés du bus de données (100).

2. Structure de traitement de données selon la revendication 1, **caractérisée par le fait que** la pluralité de processeurs (20i) peuvent, chacun, être couplés en mode de connexion parallèle au bus de données (100), et
qu'une communication de données par l'intermédiaire du bus de données (100) avec l'un de la pluralité de processeurs (20i), de préférence une programmation de ce processeur (20i), est autorisée pour ce processeur (20i) et interdite pour tous les autres (20j) de la pluralité de processeurs.

3. Structure de traitement de données selon la revendication 1 ou 2, **caractérisée par le fait que** pour la communication de données par l'intermédiaire du bus de données (100) avec l'un de la pluralité de processeurs (20i), ce processeur (20i) est couplé au bus de données (100), tandis que tous les autres (20j) de la pluralité de processeurs sont séparés du bus de données (100).

4. Structure de traitement de données selon l'une des revendications 1 à 3, **caractérisée par le fait qu'**entre chaque processeur (20i) et le bus de données (100) est chaque fois couplée une unité de commutation (120i), l'unité de commutation (120i) soit couplant le processeur (20i) au bus de données (100), soit séparant celui-ci du bus de données (100).

5. Structure de traitement de données selon la revendication 4, **caractérisée par le fait que** la pluralité de processeurs (20i) peuvent être commandés par l'intermédiaire d'un bus de terrain (30) en mode de connexion parallèle.

6. Structure de traitement de données selon la revendication 5, **caractérisée par le fait**
**qu'**à chaque processeur (20i) est chaque fois associée une unité de commande (110i),
**que** les unités de commande (110i) sont couplées au bus de terrain (30), et
**que** les unités de commande (110i) peuvent recevoir des signaux de commande par l'intermédiaire du bus de terrain (30), pour soit coupler les processeurs (20i) respectifs au bus de données (100), soit les séparer du bus de données (100), par l'intermédiaire des unités de commutation (120i) concernées.

7. Commande d'entraînement, de préférence pour un robot, avec une structure de traitement de données selon l'une des revendications précédentes.
